(19) Europäisches Patentamt
European Patent Office
Office européen des brevets

(11) **EP 3 134 959 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **15744849.9**

(22) Anmeldetag: **22.04.2015**

(51) Int Cl.:
*H02K 3/04* *(2006.01)*     *H02K 3/12* *(2006.01)*

(86) Internationale Anmeldenummer:
**PCT/AT2015/050099**

(87) Internationale Veröffentlichungsnummer:
**WO 2015/161331 (29.10.2015 Gazette 2015/43)**

(54) **STATOR EINES ELEKTROMOTORS**

STATOR OF AN ELECTRIC MOTOR

STATOR DE MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.04.2014 AT 500612014**

(43) Veröffentlichungstag der Anmeldung:
**01.03.2017 Patentblatt 2017/09**

(73) Patentinhaber: **Nidec Global Appliance Austria GmbH**
**8280 Fürstenfeld (AT)**

(72) Erfinder: **SCHÖGLER, Hans-Peter**
**8350 Fehring (AT)**

(74) Vertreter: **KLIMENT & HENHAPEL Patentanwälte OG**
**Singerstrasse 8/3/9**
**1010 Wien (AT)**

(56) Entgegenhaltungen:
**DE-A1-102008 051 320     US-B1- 7 772 737**

**Beschreibung**

GEBIET DER ERFINDUNG

Die vorliegende Erfindung betrifft einen Stator eines Elektromotors, nämlich eines Elektromotors für Kältemittelverdichter, der Stator umfassend eine Wicklung, die Wicklung umfassend Windungen, wobei zumindest eine der Windungen zwei elektrisch parallel geschaltete Drähte unterschiedlicher Materialien umfasst, wobei die Windungen zumindest abschnittsweise in Aufnahmenuten des Stators angeordnet sind.

STAND DER TECHNIK

Elektromotoren weisen üblicherweise Wicklungen mit Windungen aus Draht auf. Bei den Wicklungen kann es sich insbesondere um Statorwicklungen handeln, aber auch z.B. um Rotor- bzw. Ankerwicklungen.

Grundsätzlich wird für die Windungen solcher Wicklungen nur ein Draht verwendet. Insbesondere im Bereich von Kältemittelverdichtern werden mitunter jedoch auch statt eines etwas dickeren Drahtes mit z.B. 0,7 mm Durchmesser, zwei identische Drähte mit jeweils geringerem Durchmesser von z.B. 0,5 mm verwendet, die elektrisch parallel geschaltet sind. Dies kann sich z.B. bei einem Stator als notwendig erweisen, dessen Aufnahmenuten zur Aufnahme der Windungen eine Nutöffnung aufweisen, die nicht groß genug ist, um den etwas dickeren Draht einzuziehen. Ein derartiger Kältemittelkompressor ist aus der DE 10 2008 051320 A1 bekannt.

Die Wicklungen bzw. Windungen bestehen typischerweise aus Drähten aus Kupfer (Cu) oder Aluminium (Al). Cu hat gegenüber Al den Vorteil eines niedrigeren spezifischen elektrischen Widerstandes $\rho$, womit sich kompakte Elektromotoren mit hohen Leistungen und hohen Wirkungsgraden realisieren lassen. Demgegenüber hat Al den Vorteil von geringeren Materialkosten. Limitierend für den Einsatz von Al ist insbesondere der Platz, der für die Wicklung bzw. die Windungen zur Verfügung steht, da ein Al-Draht bei gegebener Länge und vorgegebenem elektrischen Widerstand R eine Querschnittsfläche aufweist, die im Vergleich zu einem Cu-Draht um ca. 65% größer ist.

Wenn also beispielsweise bei einer Statorwicklung mit Cu-Draht die Aufnahmenuten jeweils einen Aufnahmequerschnitt mit einer Aufnahmequerschnittsfläche $A_{AQ}$ aufweisen, die zu knapp 61% oder mehr von der Wicklung ausgefüllt ist - man spricht in diesem Zusammenhang auch vom Füllgrad -, so kann diese Wicklung nicht mehr durch eine Wicklung mit Al-Draht ersetzt werden. D.h. trotzdem zur Erzielung einer gewünschten Leistung und/oder eines gewünschten Wirkungsgrads des Elektromotors die Aufnahmenuten des Stators bei weitem nicht vollständig mit Cu-Draht ausgefüllt sind, ist es nicht möglich, den Cu-Draht durch Al-Draht zu ersetzen, sodass vergleichsweise hohe Materialkosten in Kauf genommen werden müssen. Die Druckschrift US 7 772 737 B1 zeigt einen Stator eines Elektromotors umfassend eine Wicklung, die Wicklung umfassend Windungen, wobei zumindest eine der Windungen zwei elektrisch parallel geschaltete Drähte unterschiedlicher Materialien umfasst.

AUFGABE DER ERFINDUNG

Die vorliegende Erfindung hat daher zur Aufgabe, einen Stator mit einer Wicklung zur Verfügung zu stellen, die die oben genannten Nachteile vermeidet und besonders kostengünstig ist. Insbesondere soll es ermöglicht werden, ohne Änderung des Statordesigns für verschiedene zu erreichende Elektromotorleistungen und/oder Elektromotorwirkungsgrade maximale Füllgrade zu realisieren.

DARSTELLUNG DER ERFINDUNG

Erfindungsgemäß wird die Aufgabe durch die Kältemittelkompressoranordnung gemäß dem unabhängigen Anspruch 1 gelöst. Vorteilhafte Ausgestaltungen sind Gegenstand der abhängigen Ansprüche. Kern der Erfindung ist die Idee, Wicklungen mit Windungen vorzusehen, bei welchen Windungen Drähte unterschiedlicher Materialien verwendet werden, wobei die Drähte elektrisch parallel geschaltet sind. Als Windung wird dabei ein Durchgang der Wicklung verstanden.

Wenn also bei einer vorgegebenen zu erreichenden Leistung und/oder einem vorgegebenen zu erreichenden Wirkungsgrad eines Elektromotors z.B. ein vollständiger Ersatz einer Wicklung eines Stators oder eines Rotors bzw. Ankers aus Cu durch eine Wicklung aus Al aus Platzgründen nicht möglich ist, kann eine erfindungsgemäße Wicklung mit elektrisch parallel geschalteten Cu- und Al-Drähten verwendet werden. Die Drähte sind dabei durch Krimpverbinder und/oder durch Löten miteinander verbunden.

Dabei können die Größen bzw. Dicken der Drähte so gewählt werden, dass eine optimale Platzausnutzung und somit eine größtmögliche Kostenersparnis erfolgt.

Die erfindungsgemäße Wicklung kann z.B. als Wicklung in einem Rotor und/oder in einem Stator verwendet werden. Der Einsatz als Statorwicklung ermöglicht es beispielsweise, mit einem Design des Stators bzw. eines Spulenkerns des Stators - insbesondere im Hinblick auf die Gestaltung der Aufnahmenuten - Elektromotoren unterschiedlichster Leistung und/oder Wirkungsgrade zu realisieren und gleichzeitig die Materialkosten möglichst niedrig zu halten.

Für eine maximale Kostenersparnis kann bei vorgegebener zu erreichender Leistung und/oder vorgegebenem zu erreichenden Wirkungsgrad des Elektromotors die Ausnutzung des vorhandenen Platzes durch entsprechend hohen Einsatz von Drähten aus einem kostengünstigen Material maximiert werden, also z.B. durch einen entsprechend hohen Anteil an Al bei einer Ausführung mit elektrisch parallel geschalteten Al- und Cu-Drähten. Entsprechend ist es bei einem Stator eines Elektromotors, insbesondere eines Elektromotors für Kältemittelverdichter, der Stator umfassend eine Wicklung, die Wicklung umfassend Windungen, wobei zumindest eine der Windungen zwei elektrisch parallel geschaltete Drähte unterschiedlicher Materialien umfasst, wobei die Windungen zumindest abschnittsweise in Aufnahmenuten des Stators angeordnet sind, erfindungsgemäß vorgesehen, dass die Aufnahmenuten jeweils einen Aufnahmequerschnitt mit einer Aufnahmequerschnittsfläche $A_{AQ}$ aufweisen, innerhalb dessen die Windungen angeordnet sind und eine Gesamtquerschnittsfläche $A_{ges}$ überdecken, wobei sich ein Füllgrad F als Verhältnis von Gesamtquerschnittsfläche zu Aufnahmequerschnittsfläche

$$F = A_{ges} / A_{AQ}$$

ergibt und wobei die Wicklung so ausgelegt ist, dass bei einer vorgegebenen Leistung und/oder einem vorgegebenen Wirkungsgrad des Elektromotors der Füllgrad F in zumindest einer Aufnahmenut größer ist, als der höchste Füllgrad bei einer alternativen Wicklung, die genau so viele Windungen aufweist, welche Windungen jedoch aus Drähten nur eines Materials bestehen. Z.B. wird eine erfindungsgemäße Wicklung mit Windungen, die elektrisch parallel geschaltete Cu- und Al-Drähte aufweisen, so ausgelegt, dass sich bei gleicher Leistung und/oder gleichem Wirkungsgrad des Elektromotors ein höherer Füllgrad ergibt als bei einer Wicklung mit derselben Anzahl N an Windungen, die nur Cu-Drähte aufweisen. Hierzu werden insbesondere die Querschnittsflächen bzw. Durchmesser der Cu- und Al-Drähte so gewählt, dass sich ein maximaler Füllgrad bei gegebener Leistung und/oder gegebenem Wirkungsgrad des Elektromotors ergibt.

Selbstverständlich sind auch Windungen mit insgesamt mehr als zwei elektrisch parallel geschalteten Drähten möglich, z.B. drei oder vier Drähte. Entscheidend ist jedoch, dass zumindest zwei dieser Drähte aus unterschiedlichen Materalen ausgebildet sind, wobei die Materialien vorzugsweise unterschiedliche spezifische elektrische Widerstände aufweisen. Grundsätzlich sind dabei unterschiedlichste Materialien vorstellbar, beispielsweise auch Silber und/oder Eisen.

Aufgrund der sehr guten elektrischen Leitfähigkeit von Cu ist es bei einer bevorzugten Ausführungsform des erfindungsgemäßen Stators vorgesehen, dass einer der elektrisch parallel geschalteten Drähte ein Cu-Draht ist.

Ein großes Potenzial für die Einsparung von Materialkosten bei einer relativ guten Leitfähigkeit bietet Al. Daher ist es bei einer bevorzugten Ausführungsform des erfindungsgemäßen Stators vorgesehen, dass einer der elektrisch parallel geschalteten Drähte ein Al-Draht ist.

Um insbesondere unterschiedlichen spezifischen elektrischen Widerständen der eingesetzten Materialien Rechnung zu tragen und vorzugsweise einen im Wesentlichen gleichen elektrischen Widerstand jener Drähte, die elektrisch parallel geschaltet werden, zu erzielen, ist es bei einer bevorzugten Ausführungsform des erfindungsgemäßen Stators vorgesehen, dass die zwei elektrisch parallel geschalteten Drähte normal auf ihre Längsachsen Querschnitte mit unterschiedlich großen Querschnittsflächen aufweisen. Freilich richten sich die Querschnitte bzw. Querschnittsflächen der Drähte auch nach den vorhandenen Platzverhältnissen für die Wicklung.

Die Querschnitte der Drähte können grundsätzlich beliebige Form aufweisen, beispielsweise elliptisch oder rechteckig. Dies kann sich mitunter als hilfreich erweisen, um einen vorhandenen Platz, z.B. in einer Aufnahmenut, bestmöglich auszufüllen. Aufgrund der leichten Verfügbarkeit ist es bei einer bevorzugten Ausführungsform des erfindungsgemäßen Stators vorgesehen, dass die Querschnitte der zwei elektrisch parallel geschalteten Drähte kreisförmig sind und unterschiedlich große Durchmesser aufweisen. Es sind jedoch auch Anwendungsfälle denkbar, bei denen im Wesentlichen gleiche Durchmesser Verwendung finden.

Da sich auf die geschilderte Weise sehr hohe Füllgrade erzielen lassen, ist es bei einer besonders bevorzugten Ausführungsform des erfindungsgemäßen Stators vorgesehen, dass für den Füllgrad in der zumindest einen Aufnahmenut (2) F $\geq$ 0,8, vorzugsweise F $\geq$ 0,85, besonders bevorzugt F $\geq$ 0,9 gilt. Die Aufnahmenuten können grundsätzlich unterschiedliche Füllgrade aufweisen. In der Praxis schwanken diese Füllgrade nur geringfügig, z.B. um 1% bis 2%.

Insbesondere im Bereich von Kältemittelkompressoren ist es eine immer wieder auftretende Aufgabe, Elektromotoren unterschiedlicher Leistung und/oder unterschiedlichen Wirkungsgrads zur Verfügung zu stellen - entsprechend den verschiedenen Leistungen und/oder Wirkungsgraden der Kältemittelkompressoren. Zur Lösung dieser Aufgabe ist erfindungsgemäß ein Kältemittelkompressor umfassend einen Elektromotor mit einem erfindungsgemäßen Stator vorgesehen.

KURZE BESCHREIBUNG DER FIGUREN

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.

Dabei zeigt:

Fig. 1      eine axonometrische Ansicht eines erfindungsgemäßen Stators eines Elektromotors für einen Kältemittelkompressor

Fig. 2     eine Schnittansicht des Stators aus Fig. 1

Fig. 3     eine vergrößerte Ansicht des Details A aus Fig. 2

Fig. 4     eine vergrößerte Ansicht des Details B aus Fig. 3

Fig. 5     eine schematische Darstellung eines Teils einer Windung einer erfindungsgemäßen Wicklung

## WEGE ZUR AUSFÜHRUNG DER ERFINDUNG

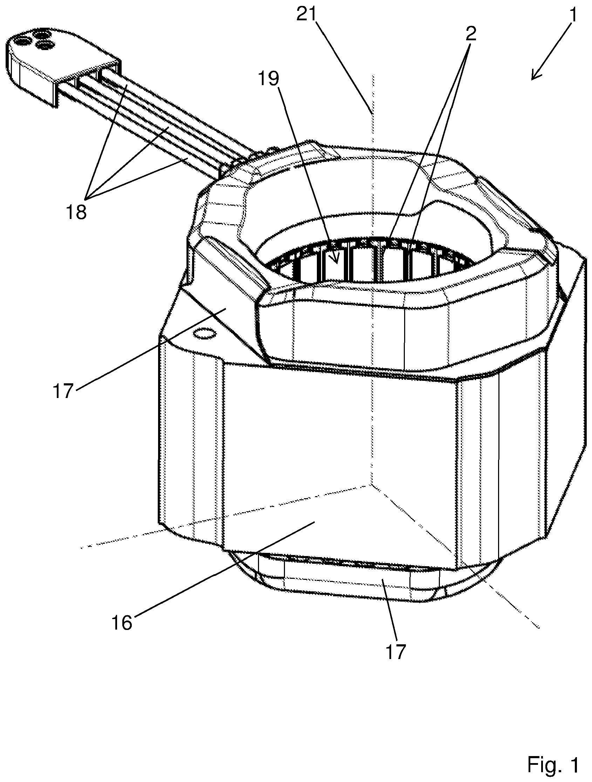

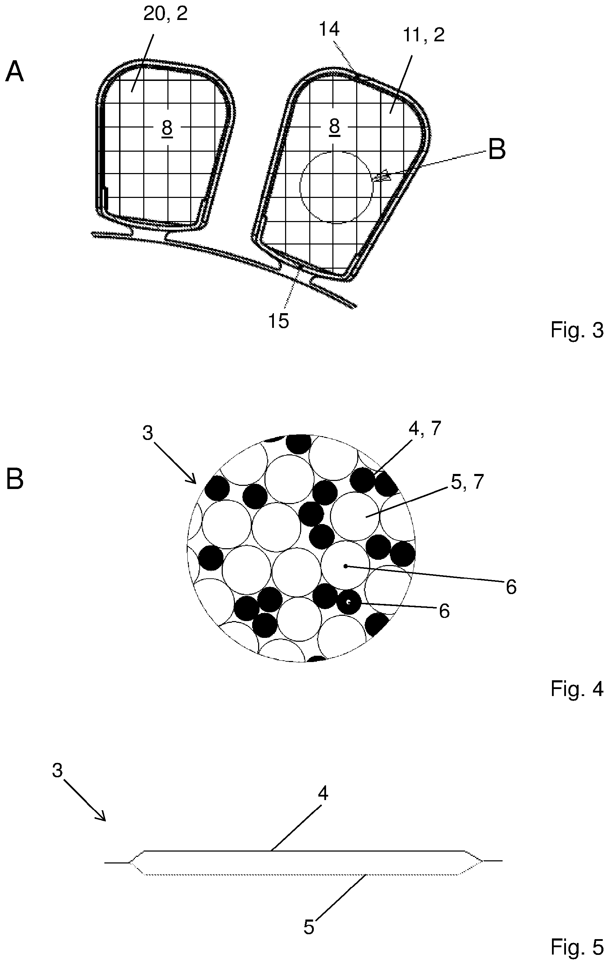

Fig. 1 zeigt in einer axonometrischen Ansicht einen Stator 1 eines Elektromotors eines Kältemittelkompressors. Der Stator 1 weist eine Statorbohrung 19 zur Aufnahme eines sich um eine Drehachse 21 drehenden Rotors (nicht dargestellt) auf. Der Stator 1 umfasst einen Spulenkern 16 mit Aufnahmenuten 2, die zur Aufnahme von Windungen 3 (vgl. Fig. 4 und Fig. 5) einer Wicklung, auch Statorwicklung genannt, dienen. Sich ergebende Wickelköpfe können mit einer Isolierung 17 abgedeckt sein, die die Wickelköpfe elektrisch gegen Bauteile außerhalb des Stators 1, insbesondere gegen ein Kompressorgehäuse (nicht dargestellt), isoliert. Weiters sind in Fig. 1 elektrische Leitungen 18 erkennbar, die zum elektrischen Anschluss der Wicklung bzw. zur Energieversorgung dienen.

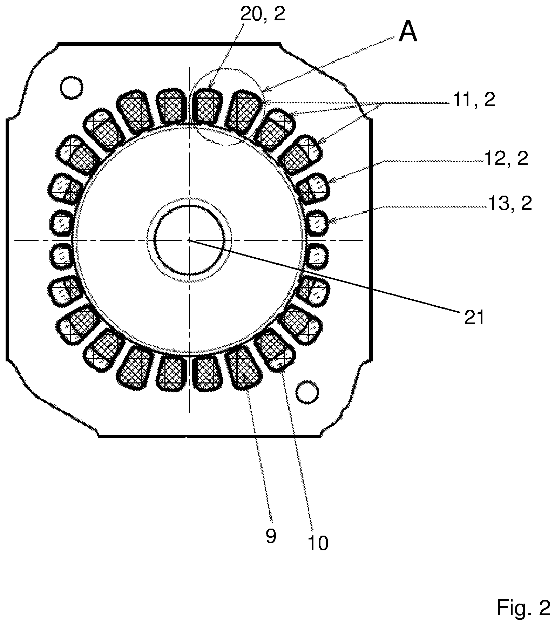

Fig. 2 zeigt eine Schnittansicht des Stators 1 normal zur Drehachse 21, in welcher Schnittansicht, die Aufnahmenuten 2 sehr deutlich erkennbar sind. Dabei sind die Aufnahmenuten 2 nicht notwendigerweise alle gleich geformt, sondern können, wie in Fig. 2 illustriert, unterschiedlich gestaltet sein. Konkret sind im Ausführungsbeispiel der Fig. 2 Aufnahmenuten 2 eines ersten Typs 20, eines zweiten Typs 11, eines dritten Typs 12 sowie eines vierten Typs 13 erkennbar. Die Typen 20, 11, 12 und 13 unterscheiden sich dabei im Wesentlichen durch Form und Größe ihres Querschnitts normal auf die Drehachse 21.

In den Aufnahmenuten 2 befinden sich die Windungen der Wicklung, wobei die Wicklung im Ausführungsbeispiel der Fig. 2 aus einer Hauptwicklung 9 und einer Nebenwicklung 10 besteht. Die Nebenwicklung 10 ist zum Anlaufen und/oder für einen Teilbetrieb des vorzugsweise als Einphasen-Asynchronmotors ausgebildeten Elektromotors vorgesehen, indem die Nebenwicklung 10 ein gegenüber der Hauptwicklung 9 zeitlich phasenverschobenes Magnetfeld erzeugt. Um im Stator 1 ein Drehfeld zu erzeugen und im Rotor (nicht dargestellt) eine für seine Drehbewegung verantwortliche Spannung zu induzieren, müssen die in der Hauptwicklung 9 und der Nebenwicklung 10 entstehenden Wechselfelder räumlich und zeitlich zueinander versetzt sein.

Fig. 3 zeigt eine vergrößerte Ansicht des Details A aus Fig. 2 mit Aufnahmenuten 2 des ersten Typs 20 und des zweiten Typs 11. Die Aufnahmenuten 2 weisen jeweils eine Nutöffnung 15 auf, durch welche die Windungen 3 der Wicklung in die Aufnahmenuten 2 eingebracht werden. Es ist in Fig. 3 erkennbar, dass die Aufnahmenuten 2 eine Isolierung 14 aufweisen, um die aufgenommenen Windungen 3 zusätzlich - die Windungen 3 weisen üblicherweise eine Lackschicht zur elektrischen Isolation auf - elektrisch gegenüber dem Spulenkern 16 zu isolieren. Da die Isolierung 14 einen gewissen, wenn auch sehr geringen Platz innerhalb der Aufnahmenuten 2 beansprucht, verbleibt in jeder Aufnahmenut 2 entsprechend ein gewisser Aufnahmequerschnitt 8, der für die Aufnahme der Windungen 3 in jeder Aufnahmenut 2 zur Verfügung steht und eine Aufnahmequerschnittsfläche $A_{AQ}$ aufweist.

Die Windungen 3, die in Fig. 4 in der vergrößerten Ansicht des Details B aus Fig. 3 im Detail zu erkennen sind, füllen jedoch nicht den gesamten Aufnahmequerschnitt 8 aus. D.h. sämtliche Windungen 3 überdecken innerhalb des Aufnahmequerschnitts 8 eine Gesamtquerschnittsfläche $A_{ges}$, die kleiner ist als die Aufnahmequerschnittsfläche $A_{AQ}$. Somit lässt sich für die jeweilige Aufnahmenut 2 ein Füllgrad F definieren als das Verhältnis zwischen Gesamtquerschnittsfläche $A_{ges}$ und Aufnahmequerschnittsfläche $A_{AQ}$:

$$F = A_{ges} / A_{AQ}.$$

Um bei vorgegebener Leistung und/oder vorgegebenem Wirkungsgrad des Elektromotors den Füllgrad F zu maximieren und Materialkosten zu sparen, wird die Wicklung erfindungsgemäß mit Windungen 3 aus elektrisch parallel geschalteten Drähten unterschiedlicher Materialien gefertigt.

Fig. 5 zeigt ein Detail einer solchen Windung 3, die einen Cu-Draht 4 und einen dazu elektrisch parallel geschalteten Al-Draht 5 umfasst. Vorzugsweise weisen der Cu-Draht 4 und der Al-Draht 5 normal auf ihre Längsachsen 6 Querschnitte 7 mit unterschiedlich großen Querschnittsflächen 7 auf. Im gezeigten Ausführungsbeispiel sind die Querschnitte 7 des Cu-Drahts 4 und des Al-Drahts 5 kreisförmig, wobei der Durchmesser D des Al-Drahts 5 größer ist als der Durchmesser d des Cu-Drahts 4, wie insbesondere in der Darstellung der Fig. 4 erkennbar ist. Dabei weisen die Drähte 4, 5 jeweils eine Lackschicht zur elektrischen Isolation auf, die in Fig. 4 nicht extra dargestellt ist und in den Durchmessern D, d inkludiert ist.

Beispielsweise wird für einen vorgegebenen Leistungswert und/oder Wirkungsgrad eines Elektromotors mit einer Wicklung, bei welcher nur ein Cu-Draht mit einem Durchmesser d' = 0,55 mm (inkl. Lackschicht) verwendet wird, mit einer Windungszahl N = 113 ein Füllfaktor F ≈ 0,7 erzielt. Erfindungsgemäß kann stattdessen eine Wicklung mit ebenfalls N = 113 Windungen 3 mit einem Cu-Draht 4 mit Durchmesser d = 0,375 mm (inkl. Lackschicht) und einem dazu elektrisch parallel geschalteten Al-Draht 5 mit Durchmesser D = 0,5 mm (inkl. Lackschicht) verwendet werden, wodurch ein Füllfaktor F ≈ 0,95 erzielt wird. Hierdurch wird bei gleicher Leistung und/oder gleichem Wirkungsgrad des Elektromotors eine größtmögliche Materialkosteneinsparung realisiert, ohne dass das Design des Stators 1, insbesondere im Hinblick auf die Gestaltung der Aufnahmenuten 2, geändert werden müsste. D.h. es können mit einem Spulenkern 16 bzw. mit einem Design des Spulenkerns 16 Elektromotoren unterschiedlichster Leistung und/oder Wirkungsgrads realisiert werden, und gleichzeitig können die Materialkosten möglichst niedrig gehalten werden.

Es sei bemerkt, dass bei der Bestimmung der Füllgrade die jeweilige Gesamtquerschnittsfläche $A_{ges}$ in der Praxis näherungsweise berechnet werden kann als

$$A_{ges} = N * d'^2$$

bzw.

$$A_{ges} = N * (d^2 + D^2).$$

BEZUGSZEICHENLISTE

| | |
|---|---|
| 1 | Stator |
| 2 | Aufnahmenut |
| 3 | Windung |
| 4 | Cu-Draht |
| 5 | Al-Draht |
| 6 | Längsachse eines Drahtes |
| 7 | Querschnitt eines Drahtes |
| 8 | Aufnahmequerschnitt |
| 9 | Hauptwicklung |
| 10 | Hilfswicklung |
| 11 | Aufnahmenut, zweiter Typ |
| 12 | Aufnahmenut, dritter Typ |
| 13 | Aufnahmenut, vierter Typ |
| 14 | Isolierung der Aufnahmenut |
| 15 | Nutöffnung |
| 16 | Spulenkern |
| 17 | Isolierung des Wickelkopfs |
| 18 | Elektrische Leitung |
| 19 | Statorbohrung |
| 20 | Aufnahmenut, erster Typ |
| 21 | Drehachse |

**Patentansprüche**

1. Kältemittelkompressor umfassend einen Elektromotor mit einem Stator (1), der Stator (1) umfassend eine Wicklung, die Wicklung umfassend Windungen (3), **dadurch gekennzeichnet, dass**

zumindest eine der Windungen (3) zwei elektrisch parallel geschaltete Drähte (4, 5) unterschiedlicher Materialien umfasst,
wobei die Windungen (3) zumindest abschnittsweise in Aufnahmenuten (2) des Stators (1) angeordnet sind,
wobei die Aufnahmenuten (2) jeweils einen Aufnahmequerschnitt (8) mit einer Aufnahmequerschnittsfläche $A_{AQ}$ aufweisen, innerhalb dessen die Windungen (3) angeordnet sind und eine Gesamtquerschnittsfläche $A_{ges}$ überdecken,
wobei sich ein Füllgrad F als Verhältnis von Gesamtquerschnittsfläche zu Aufnahmequerschnittsfläche

$$F = A_{ges} / A_{AQ}$$

ergibt und
wobei die Wicklung so ausgelegt ist, dass bei einer vorgegebenen Leistung und/oder einem vorgegebenen Wirkungsgrad des Elektromotors der Füllgrad F in zumindest einer Aufnahmenut (2) größer ist, als der höchste Füllgrad F bei einer alternativen Wicklung, die genau so viele Windungen aufweist, welche Windungen jedoch aus Drähten nur eines Materials bestehen.

2. Kältemittelkompressor nach Anspruch 1, **dadurch gekennzeichnet, dass** einer der elektrisch parallel geschalteten Drähte ein Cu-Draht (4) ist.

3. Kältemittelkompressor nach einem der Ansprüche 1 bis 2, **dadurch gekennzeichnet, dass** einer der elektrisch parallel geschalteten Drähte ein Al-Draht (5) ist.

4. Kältemittelkompressor nach einem der Ansprüche 1 bis 3, **dadurch gekennzeichnet, dass** die zwei elektrisch parallel geschalteten Drähte (4, 5) normal auf ihre Längsachsen (6) Querschnitte (7) mit unterschiedlich großen Querschnittsflächen aufweisen.

5. Kältemittelkompressor nach Anspruch 4, **dadurch gekennzeichnet, dass** die Querschnitte (7) der zwei elektrisch parallel geschalteten Drähte (4, 5) kreisförmig sind und unterschiedlich große Durchmesser aufweisen.

6. Kältemittelkompressor nach einem der Ansprüche 1 bis 5, **dadurch gekennzeichnet, dass** für den Füllgrad in der zumindest einen Aufnahmenut (2) F ≥ 0,8, vorzugsweise F ≥ 0,85, besonders bevorzugt F ≥ 0,9 gilt.

7. Set aus mehreren Kältemittelkompressoren, umfassend zumindest einen Kältemittelkompressor nach einem der Ansprüche 1 bis 6, **dadurch gekenn-**

zeichnet, dass die Statoren (1) der Elektromotoren den gleichen Spulenkern (16) aufweisen, die Elektromotoren jedoch unterschiedliche Leistung und/oder unterschiedlichen Wirkungsgrad aufweisen.

## Claims

1. Refrigerant compressor comprising an electric motor with a stator (1), the stator (1) comprising a coil, the coil comprising windings (3), **characterized in that** at least one of the windings (3) comprises two wires (4, 5) of different materials that are electrically connected in parallel, where the windings (3) are disposed at least in sections in mounting slots (2) of the stator (1), where the mounting slots (2) each have a mounting cross section (8) having a mounting cross-sectional area $A_{AQ}$, within which the windings (3) are disposed and cover a total cross-sectional area $A_{ges}$, where a degree of filling F is defined as the ratio of the total cross-sectional area to the mounting cross-sectional area

$$F = A_{ges} / A_{AQ}$$

and where the coil is designed so that for a given power and/or a given efficiency of the electric motor, the degree of filling F is greater in at least one mounting slot (2) than the highest degree of filling F in the case of an alternative coil that has exactly as many windings consisting of wires of only one material.

2. Refrigerant compressor according to Claim 1, **characterized in that** one of the wires electrically connected in parallel is a Cu wire (4).

3. Refrigerant compressor according to one of Claims 1 to 2, **characterized in that** one of the wires electrically connected in parallel is an Al wire (5).

4. Refrigerant compressor according to one of Claims 1 to 3, **characterized in that** the two wires (4, 5) that are electrically connected in parallel have cross sections (7) with different cross-sectional areas normal to their longitudinal axes (6).

5. Refrigerant compressor according to Claim 4, **characterized in that** the cross sections (7) of the two wires (4, 5) that are electrically connected in parallel are circular and have different diameters.

6. Refrigerant compressor according to one of Claims 1 to 5, **characterized in that** for the degree of filling in the at least one mounting slot (2) $F \geq 0.8$ holds, preferably $F \geq 0.85$, especially preferably $F \geq 0.9$.

7. Set of a plurality of refrigerant compressors comprising at least one refrigerant compressor according to one of Claims 1 to 6, **characterized in that** the stators (1) of the electric motors have the same coil core (16), but the electric motors have different power and/or different efficiency.

## Revendications

1. Compresseur de réfrigérant comprenant un moteur électrique avec un stator (1), le stator (1) comprenant un enroulement, l'enroulement comprenant des spires (3),
   **caractérisé en ce qu'**au moins l'une des spires (3) comprend deux fils (4, 5) de matériaux différents couplés électriquement en parallèle,
   les spires (3) étant disposées au moins sur certaines parties dans des rainures de réception (2) du stator (1),
   les rainures de réception (2) présentant chacune une section transversale de réception (8) avec une surface de section transversale de réception $A_{AQ}$, à l'intérieur de laquelle les spires (3) sont disposées et couvrent une surface de section transversale totale $A_{ges}$,
   ce dont il résulte un degré de remplissage F comme rapport de la surface de section transversale totale sur la surface de section transversale de réception

$$F = A_{ges} / A_{AQ}$$

   et l'enroulement étant conçu de telle sorte que, pour une puissance prédéfinie et/ou un rendement prédéfini du moteur électrique, le degré de remplissage F dans au moins une rainure de réception (2) est supérieur au degré de remplissage F le plus élevé pour un autre enroulement qui présente exactement le même nombre de spires, lesquelles spires étant cependant constituées de fils d'un seul matériau.

2. Compresseur de réfrigérant selon la revendication 1, **caractérisé en ce que** l'un des fils couplés électriquement en parallèle est un fil en Cu (4).

3. Compresseur de réfrigérant selon l'une des revendications 1 à 2, **caractérisé en ce que** l'un des fils couplés électriquement en parallèle est un fil en Al (5).

4. Compresseur de réfrigérant selon l'une des revendications 1 à 3, **caractérisé en ce que** les deux fils (4, 5) couplés électriquement en parallèle présentent perpendiculairement à leurs axes longitudinaux (6) des sections transversales (7) avec des surfaces de section transversale différemment grandes.

**5.** Compresseur de réfrigérant selon la revendication 4, **caractérisé en ce que** les sections transversales (7) des deux fils (4, 5) couplés électriquement en parallèle sont circulaires et présentent des diamètres différents.

**6.** Compresseur de réfrigérant selon l'une des revendications 1 à 5, **caractérisé en ce qu'**il s'applique $F \geq 0,8$, de préférence $F \geq 0,85$, particulièrement de préférence $F \geq 0,9$, pour le degré de remplissage dans ladite au moins une rainure de réception (2).

**7.** Ensemble de plusieurs compresseurs de réfrigérant, comprenant au moins un compresseur de réfrigérant selon l'une des revendications 1 à 6, **caractérisé en ce que** les stators (1) des moteurs électriques présentent le même noyau de bobine (16) mais que les moteurs électriques présentent une puissance différente et/ou un rendement différent.

Fig. 1

20, 2

A

11, 2

12, 2

13, 2

21

9    10

Fig. 2

A

Fig. 3

B

Fig. 4

Fig. 5

**IN DER BESCHREIBUNG AUFGEFÜHRTE DOKUMENTE**

**In der Beschreibung aufgeführte Patentdokumente**

- DE 102008051320 A1
- US 7772737 B1